(19) Europäisches Patentamt
European Patent Office
Office européen des brevets

(11) EP 3 495 040 A1

(12) EUROPEAN PATENT APPLICATION

(43) Date of publication:
**12.06.2019 Bulletin 2019/24**

(21) Application number: **17206161.6**

(22) Date of filing: **08.12.2017**

(51) Int Cl.:
***B01J 20/32*** *(2006.01)*
***B01J 20/281*** *(2006.01)*
***C08F 212/08*** *(2006.01)*
***B01J 39/26*** *(2006.01)*
***B01J 20/26*** *(2006.01)*
***B01J 20/28*** *(2006.01)*
***C08F 257/02*** *(2006.01)*
***C08F 2/00*** *(2006.01)*
***C08F 2/22*** *(2006.01)*
***B01J 41/20*** *(2006.01)*
***B01J 20/285*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **ETH Zurich**
**8092 Zurich (CH)**

(72) Inventors:
- **STORTI, Giuseppe**
  **8046 Zürich (CH)**
- **MORBIDELLI, Massimo**
  **8046 Zürich (CH)**
- **CINGOLANI, Alberto**
  **8050 Zürich (CH)**
- **LORENZ, Marcel**
  **8037 Zürich (CH)**

(54) **POROUS MATERIALS, METHOD FOR PRODUCING SAME AND USES THEREOF**

(57) Method for preparing surface-functionalized macro porous micro-clusters is proposed comprising at least the following individual steps in given order:
a) synthesis of dispersed cross-linked polymeric latex primary core particles starting from at least one monomer or oligomer in an emulsion polymerization under starved conditions;
b) synthesis of a shell layer on the surface of the primary core particles to form core-shell particles starting under starved conditions from the same at least one monomer or oligomer as in step a) and in addition to that at least one additional azide monomer;
c) swelling of the core-shell particles with a liquid comprising at least one of the monomers or oligomers as used in a) as well as a polymerization initiator but preferably no azide monomer in particular not the additional azide monomer from step b);
d) formation of agglomerates of the particles by application of shear;
e) polymerization of the agglomerates to form the macro porous micro-clusters;
f) direct or indirect surface-functionalization of the agglomerates by way of Cu-(I)-catalyzed or strain promoted azide-alkyne cycloaddition with the azide introduced in step b).

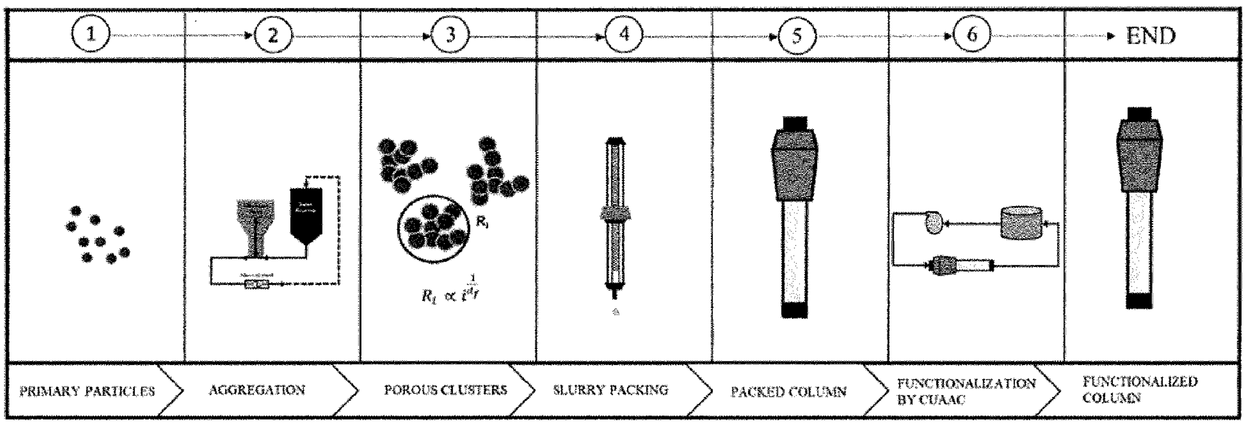


FIG. 11

EP 3 495 040 A1

## Description

TECHNICAL FIELD

The present invention relates to methods for the preparation of macroporous particles, macroporous particles obtained using such methods as well as to uses of such macroporous particles.

PRIOR ART

The synthesis of macroporous copolymer resins has been extensively investigated. Applications of porous resins include among others solid-phase synthesis, extraction, ion exchange, catalysis, pollutant adsorption, chromatography and insulators.

Irrespectively of how sophisticated the synthetic procedure is, a pore-generating system is typically employed in the production of macroporous polymer resins. This may be a traditional inert porogen for generic applications, or a specifically-interacting template for specific applications, e.g. affinity matrixes. In the first case, a good or a poor solvent for the incipient polymer network, a non-reactive linear polymer or a combination of the three can be applied. While initially the porogenic mixture forms a single phase with the monomer and the crosslinker, at some point during the course of polymerization phase separation of the growing polymer network occurs, which might be either due to extensive crosslinking or simply to porogen-polymer matrix incompatibility. The polymeric nuclei thus formed organize themselves into microspheres, which subsequently come together into larger agglomerates that constitute the main building blocks of the final polymer network. The resulting pores are ultimately filled with the porogen, which is eventually extracted with an appropriate solvent or series of solvents at the end of the polymerization. The resulting pore morphology, pore size distribution and specific surface area depend on the amount and composition of the porogenic mixture, crosslinker, temperature and time of polymerization, as well as whether the polymerization is run in a dispersed system or in bulk. Obviously dispersed systems yield particles (typically micron-sized), while bulk systems yield continuous monoliths.

Despite the growing scientific attention to monoliths, their commercial application remains limited. For example, in the area of chromatography, there are limited examples of commercially available monolithic stationary phases, with particles being still the most widespread packing material. For the production of particulate resins several methods have been employed, ranging from simple surfactant-free dispersion polymerization to classical suspension polymerization or more elaborate procedures. Examples of the latter include activated swelling, seeded emulsion polymerization and staged templated suspension polymerization. Novel porogens including oligomers, ionic and steric surfactants, and others have also been proposed. Yet, in all cases the relation between the factors affecting the pore generation and properties of the final material is still not well understood and require a good deal of empiricism.

Reactive Gelation is an alternative, porogen-free method towards macroporous materials such as monoliths or microclusters. The formation of monoliths is based on the colloidal principle of stagnant Reaction-Limited Cluster Aggregation (RLCA), i.e. the aggregation of polymer particles in a stagnant suspension, partially destabilized by the addition of salt and/or acid at a concentration below the suspension's Critical Coagulation Concentration (CCC). The product is a colloidal particle gel, which is a space-filling, percolating network of weakly interconnected particles with a fractal structure. Prior to gelation the latex particles are swollen by a well-defined amount of a monomeric mixture containing a thermal radical initiator. This treatment softens the polymer particles, at least close to their surface. After the gel formation in the stagnant reaction medium the temperature is raised, inducing polymerization of the swelling monomers and a further rearrangement of the network structure, along with a substantial increase of its mechanical strength. The major novelty of the procedure of Reactive Gelation is this last step, normally referred to as "post-polymerization". It has been shown by N2 sorption and SEM analyses, that varying the amount of monomers added during the swelling step and the crosslinking degree along the primary particle radius allows controlling the surface area, pore size and rigidity of the final porous material. The resulting material is a macroporous monolith, which can be used for HPLC applications, either in the form of ground and size-classified polystyrene particles packed in a conventional column or as a single monolithic PMMA column. No size exclusion during Inverse Size-Exclusion Chromatography (ISEC) experiments and attractive mass transport properties by Van Deemter analysis has so far been demonstrated. WO 2014/079580 proposes a method for producing macro porous micro-clusters comprising at least the following individual steps in given order:

a) synthesis of dispersed cross-linked polymeric latex primary particles starting from at least one monomer or oligomer using emulsion polymerization;
b) swelling of the primary particles with a liquid comprising at least an additional charge of monomer and/or oligomer and a cross-linker, optionally further comprising functionalization agents;
c) destabilization by increase of ionic strength (by adding a salt and/or acid and/or base) in a combination with application of shear, both being above the gel formation boundary of the phase diagram, until agglomerates composed

of primary particles of the desired size are formed;

d) polymerization of the agglomerates to form the macro porous micro-clusters. Furthermore, the invention relates to correspondingly produced micro-clusters and uses of such micro-clusters in particular for chromatographic purposes. According to this disclosure, any kind of subsequent functionalization is made available by introducing functionalization agents in the swelling step (b).

Therapeutic proteins such as monoclonal antibodies have gained a lot of attention since their discovery as they are being used for a wide range of applications e.g. for treatments of cancer, immune diseases, Alzheimer, etc. However, costs for purifying those therapeutic molecules often achieve up to 80 % of the overall production costs. Predominantly, chromatography is used to purify therapeutic proteins, but the current materials have strong limitations. For instance, highly functionalized materials only provide small pores of up to 150 nm, which result in a diffusion limited and therefore time-consuming step. Even though, materials with large, flow-through pores (macropores, 500 - 1500 nm) allow convective flow through the material, thereby addressing the issue of diffusion limited flow, their ability for purification of biomolecules is contemporary limited due to complex surface functionalization. The prevalent system that also allows convective flow is based on poly(styrene) and/or poly(divinylbenzene), unsuitable for protein purification unless there is an additional coating on the surface. Another drawback of the current macroporous materials is the fabrication of those as most protocols require the use of a porogen, which must be fully extracted in an additional and often tedious step and since the material bases on styrene/DVB it needs to be coated with an additional polymer layer (e.g. polyhydroxylated polymer).

There is therefore a need for making available chromatographic material which can easily be functionalized and which then allow for high throughput high-purity separation. processes.

SUMMARY OF THE INVENTION

It is therefore an object of the present invention to provide an improved method for making porous particulate chromatographic material adapted for high throughput and low pressure drop chromatographic separation processes, in particular for biopharmaceuticals, biosimilars, which can be easily functionalized in a versatile manner.

Herein, a facile and porogen-free fabrication method of macro-porous polymers bearing azide functionality on their surface it is proposed, which are readily available for simple post-functionalization by exploiting the concept of Cu(I)-catalyzed azide-alkyne-click-chemistry (CUAAC) or copper free click reactions often referred to as strain promoted click chemistry (azide + cyclooctyne). The handy fabrication method and the ease of functionalization of the obtained macroporous materials allow the design of functional materials for different kinds of chromatography (e.g. Ion-exchange-, affinity-, hydrophobic interaction-, thermoresponsive chromatography) providing access to high performance materials in which high flow rates and hydrophilic (or, if desired hydrophobic) interactions are combined leading to a sound purification of therapeutic proteins. It is noteworthy that a wide range of ligands have been covalently attached to the macroporous base material e.g. polyelectrolytes, temperature responsive brushes, or affinity materials such as peptides and proteins. This emphasizes the wide scope of the proposed fabrication method as materials can be tailored for a variety of target molecules including but not limited to the purification of antibodies, but also other biomolecules such as enzymes, DNA, host cell proteins.

One of the key elements of the proposed method is that azide functionality (or a corresponding N-hydroxysuccinimide (NHS) or epoxy functionality, which is also introduced by CUAAC) for the subsequent surface functionalization is, and this is in contrast to the method proposed in WO 2014/079580, introduced during the step of producing the shell layer on a core shell particle in a reactive gelation process. It was found out that only by introducing the reactive functionalization agent during that shell layer generation process is working. As a matter of fact, if the azide component is, as proposed in WO 2014/079580, only introduced later on during the swelling of the particles for the subsequent agglomeration, the primary particles collapse and cannot be subjected to a controlled agglomeration process anymore and cannot be post-polymerized to form particulate separation material anymore.

During this step of swelling the core-shell particles with the liquid comprising the monomers having been used for the core particles, an azide bearing additional monomer is introduced under starved conditions, for example according to the following reaction scheme:

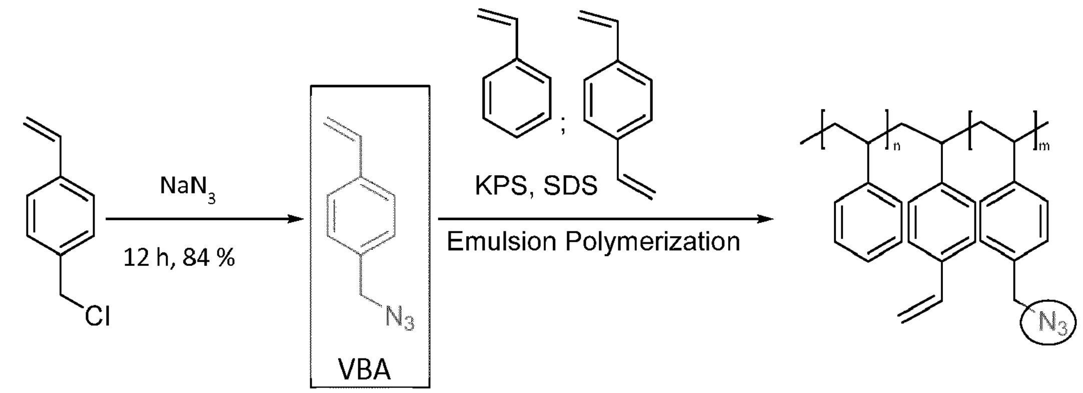


After subsequent formation of agglomerates and polymerization of the agglomerates the resulting microporous micro-clusters can be surface functionalized efficiently and with basically any reactant suitable and adapted to react with the azide functionality immobilized on the solid carrier.

The primary particles are produced via a semi-batch emulsion polymerization protocol. This procedure is divided into two steps, namely the core and the shell synthesis. In the first phase a hard and highly crosslinked seed of nanoparticles for example based on 80 % styrene (St) and 20 % divinyl benzene (DVB) is produced. In the second one, a softer, only slightly crosslinked shell, in which typically 4-vinylbenzyl azide (VBA) is included, is grown around the previously formed particles. The shell usually contains for example 2 % DVB, which acts as the crosslinker while the ratio between St and VBA can be varied to tune final product properties. These two steps can be done in two consecutive steps (one-pot two-shot), thus directly feeding the mixture required for the shell after the core synthesis.

One key feature of this invention is thus the incorporation of azide functionality on the surface of macroporous microclusters, which eventually allows the attachment of a diversity of different functional ligands for a wide range of applications. This incorporation is done by emulsion polymerization attaining polymeric nanoparticles exhibiting a core-shell architecture. The obtained particle size can for example be about 40 nm revealing 3.9 % nitrogen or 0.3 mmol/g azide functionality, respectively. Starting from those azided nanoparticles (aNP) macro-porous microclusters can for example be formed following the given procedure: aNP can be swollen with 20 % DVB with respect to the mass of used aNP's and 5 wt% of Azobisisobutyronitrile (AIBN) with respect to the used mass of DVB for 24 hours at room temperature. Subsequently, aNP's can be aggregated under shear inside a micro-channel providing a z-shaped cross-section. The obtained structures can be hardened by post-polymerizing the material for example at 70 °C for 12 hours resulting to solid macro-porous microclusters.

The macro-sized pores allow a convective flow through the material thereby carrying relevant biomolecules much faster compared to diffusion limited materials. Additionally, thanks to the azide functionalized surface, any kind of functionality can be introduced by azide-alkyne cycloaddition provided that the attached species contains at least one alkyne group. Using this concept polymer brushes were attached to the base material. The polymeric brushes are synthesized by controlled radical polymerization (CRP) techniques such as atom transfer radical polymerization (ATRP) or reversible addition-fragmentation chain-transfer polymerization (RAFT) of vinyl or acrylic monomers, which are (i) positively charged, (ii) negatively charged, or (iii) such that give thermoresponsive oligomer/polymers. The synthesized brushes bear alkyne functionality either originating from an alkyne-functionalized ATRP initiator (e.g. 3-Butynyl 2-bromoisobutyrate), from an alkyne-functionalized RAFT agent (e.g. prop-2-ynyl 4-(benzodithioyl)-4-cyanopentanoate) or by esterification of carboxyl-terminated polymer brushes with propargyl alcohol. ATRP initiator and RAFT agent can also be attached onto the microclusters surface to foster a surface initiated polymerization.

For some applications it is desirable to immobilize biomolecules such as peptides, proteins, enzymes, etc., which can also easily be done using the proposed method. By incorporation of an unnatural amino acid bearing at least one alkyne group (e.g. propargyl glycine, homopropargyl glycine) the herein described method also allows the attachment of biomolecules for e.g. affinity chromatography using immobilized short peptides or modified protein A or its fragments, or even for catalytic applications using alkyne functionalized enzymes, produced by either solid phase peptide synthesis (SPPS) or selective pressure incorporation (SPI). In an alternative procedure the azided surface is functionalized with bifunctional ligands such as glycidyl propargyl ether, or propargyl-N-hydroxysuccinimidyl ester, which allow the attachment of proteins via thiol-epoxy click reaction (cysteine residue) or the amide formation with primary amines (e.g. lysine).

More generally speaking, the present invention proposes a method for preparing surface-functionalized macro porous micro-clusters comprising at least the following individual steps in given order:

a) synthesis of dispersed cross-linked polymeric latex primary core particles starting from at least one monomer or oligomer in an emulsion polymerization under starved conditions;

b) synthesis of a shell layer on the surface of the primary core particles to form core-shell particles starting under starved conditions from the same at least one monomer or oligomer as in step a) and in addition to that at least one additional azide monomer;

c) swelling of the core-shell particles with a liquid comprising at least one of the monomers or oligomers as used in a) as well as a polymerization initiator but preferably no azide monomer, and particularly preferably not not the additional azide monomer from step b);

d) formation of agglomerates of the particles by application of shear;

e) post-polymerization of the agglomerates to form the macro porous micro-clusters;

f) direct or indirect surface-functionalization of the agglomerates by way of in particular Cu-(I)- catalyzed or strain promoted azide-alkyne cycloaddition with the azide introduced in step b).

Surface-functionalization in step f) may be carried out *directly* with the azide introduced in step b) and using at least one alkyne reactive group carrying surface modification moiety. Alternatively surface-functionalization in step f) may be carried out *indirectly* with the azide introduced in step b), by first reacting the azide on the surface with an intermediate bifunctional reactant providing an alkyne functionality as well as another different functionality allowing then the attachment of an actual surface modification moiety. The other different functionality of the bifunctional reactant can be an epoxy group (e.g. by using glycidyl propargyl ether as intermediate bifunctional reactant) or a N-hydroxysuccinimide moiety group (e.g. by using Propargyl-*N*-hydroxysuccinimidyl ester, Alkyne-PEGS-*N*-hydroxysuccinimidyl ester, or derivatives with longer PEG units, e.g. up to 20kDa PEG in between, as intermediate bifunctional reactant). This other different functionality can then be used for subsequent functionalization of the agglomerates with surface modification moieties, e.g. by way of thiol (HS) or amine (HN) functionalities on these surface modification moieties.

Between these steps additional steps may take place, such as rinsing steps, heating steps, and in particular between steps e) and f) the macro porous micro-clusters can be handled before the actual surface-functionalization. It is for example possible to first place the macro porous micro-clusters to where they are finally to be used (for example into a chromatographic column) and to go for in situ functionalization or vice versa.

According to a first preferred embodiment, the at least one monomer used in steps a)-c) is selected from the following group: styrene based monomers, acrylic acetate based monomers, vinyl acetate based monomers or a combination thereof, wherein preferably at least one of styrene and divinylbenzene are used, most preferably a combination of styrene and divinylbenzene.

The additional azide monomer used in step b) is preferably selected from the group consisting of: vinyl benzyl azide, azidoalkyl methacrylate, azidoalkyl acrylate, wherein preferably the alkyl moiety is a linear saturated aliphatic chain having 1-7, preferably 2-4 carbon atoms, wherein preferably it is selected as para-vinylbenzyl azide.

The monomers used in step a)-c) are preferably selected to be at least one of styrene and divinylbenzene, and wherein the additional azide monomer in step b) is selected to be para-vinylbenzyl azide.

In step a) a mixture of styrene and divinylbenzene can be used, preferably in a weight proportion in the range of 60:40-95:5, most preferably in a weight proportion in the range of 75:25-90:10.

In step b) preferably a mixture of styrene and para-vinyl benzyl azide, or a mixture of styrene, divinylbenzene and para-vinyl benzyl azide is used, wherein preferably the weight proportion is selected as follows:

50-80 %, preferably 60-70% styrene;
0-10%, preferably 1-5% divinylbenzene;
10-50%, preferably 30-45% and para-vinyl benzyl azide;
wherein the components supplement to 100% by weight;

In step c) preferably a mixture of styrene and divinylbenzene is used, wherein preferably a weight proportion in the range of 95:5-60:40, preferably in the range of 90:10-70:30 is used.

During step d) for example a microfluidic flow through mixing device can be used. Preferably, during step d) a shear rate in the range of $1 \times 10^5$ - $1 \times 10^8$ $s^{-1}$, preferably in the range of $1 \times 10^6$ - $1 \times 10^7$ $s^{-1}$ is applied, for example by using a flow through mixing device.

During this step d) additional destabilization is possible by adding a salt and/or acid and/or base.

Generally speaking, during step e) polymerization takes place using the following conditions: clusters, dispersed in water, are post-polymerized at 70 °C 12 h with top strirring agitation of 100 rpm.

In step a) preferably a core particle with a higher degree of cross-linking is generated than the cross-linking of the shell in step b). This can be achieved by adding a smaller amount and/or different and weaker type of cross-linking agent and/or initiator agent in step b). The cross-linking agent can be selected as DVB and the initiator agent can be one selected from the following group: persulfate, preferably potassium persulfate, AIBN.

Step f) can, as mentioned above, be carried out before introducing the macro porous micro-clusters into a chromatographic separation column. For example, it can be highly advantageous to pack the macro porous micro-clusters first into a chromatographic column and to then surface functionalize the readily packed column. Surprisingly, a lower pressure drop can in under certain conditions be made available using functionalization in place. Step f) can therefore be carried out after packing the macro porous micro-clusters into a chromatographic separation column, wherein the macro porous micro-clusters are surface functionalized in step f) while being located in the column, and wherein, and after washing and an optional first equilibration the column is used for chromatographic separation.

Step f) preferably involves the attachment of an amino acid-based molecule, in particular peptide, oligo peptide, or a protein, wherein the amino acid-based molecule can optionally first be chemically modified to be suitable for click chemistry, or by providing a reactive cysteine terminal or side chain.

Step f) may also involve the attachment of copolymers of alkyloxy, acrylate moieties, styrene, di(ethylene glycol) methyl ether methacrylate, poly(ethylene glycol) methyl ether methacrylate, Poly(ethylene glycol) methyl ether acrylate, bearing at least one terminal or sidechain alkyne group, or alkyne terminated Poly(2-ethyl-2-oxazoline).

Step f) may further involve the attachment of an alkyne terminated RAFT-agent or alkyne terminated ATRP initiator.

In step f) preferably copper (I) catalyzed or copper free click chemistry azide-alkyne-click-chemistry is used, preferably for the generation of polymer brushes or for attaching amino acid-based functionalizations after adding linkers with terminal epoxy, or NHS functionality.

The reactant carrying an alkyne moiety for the functionalization in step f) can be selected from the group consisting of: alkyne-functionalized ATRP initiator, preferably selected from the group consisting of 3-butinyl 2-bromoisobutyrate, propargyl 2-bromoisobutyrate, alkyne-functionalized RAFT agent, preferably selected from the group consisting of prop-2-ynyl 4-benzodithiol)-4-cyanopentanone, 2-nitro-5-(2-propynyloxy)benzyl 4-cyano-4-(phenylcarbonothioylthio)pentanoate

Furthermore, the present invention relates to surface-functionalized macro porous micro-cluster obtained or obtainable using a method as described above.

Also, the present invention relates to such a micro-cluster having a fractal dimension of at least 2.2, preferably of at least 2.3, most preferably of at least 2.5

Also the present invention relates to such a micro-cluster being free or essentially free from pores with a size below 20 nm, or below 40 nm, or below 50 nm.

Furthermore, the present invention relates to such a micro-cluster having a radius of gyration in the range of 10-100 $\mu$m and/or a surface area SBET in the range of 5-50 $m^2$ per gram.

Last but not least the present invention relates to the use of a surface-functionalized macro porous micro-cluster as detailed above and preferably as made using a process as detailed above for chromatographic purification/separation, preferably for the separation of chemical compounds and/or biopharmaceuticals including peptides, therapeutic proteins, vaccines, virus like particles or monoclonal antibodies, wherein preferably the micro-clusters are either directly or after grinding used for the separation/purification purposes, including ion chromatography, cation exchange chromatography, anion exchange chromatography, affinity chromatography, hydrophobic interaction chromatography.

Further embodiments of the invention are laid down in the dependent claims.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

- Fig. 1 shows the particle size distribution of ML-P-14;
- Fig. 2 shows the pore size distribution of ML-P-14;
- Fig. 3 shows the pressure drop (pressure in the microchannel) over a column packed with ML-P-14 compared with standard column materials;
- Fig. 4 shows the breakthrough curves of ML-C-87;
- Fig. 5 shows the dynamic binding capacity of ML-C-87;
- Fig. 6 shows a Van-Deemter plot of ML-C-87;
- Fig. 7 shows the breakthrough curve of ML-C-104;
- Fig. 8 shows a comparison of the dynamic binding capacity at 10% for ML-C-87 and ML-C-104;
- Fig. 9 shows a comparison of the pressure drop for the materials ML-C-87 and ML-C-104;
- Fig. 10 shows a test chromatogram of ML-C-28;
- Fig. 11 shows a schematic production of functionalized microporous chromatography materials.

DESCRIPTION OF PREFERRED EMBODIMENTS

**Synthesis of 4-vinylbenzyl azide (VBA):**

In a 500 ml 3 neck flask 26.8 g (413 mmol, 3 eq.) sodium azide were added to 200 ml N,N-dimethylformamide (DMF) and cooled down to 5 °C. Afterwards, 21 g (138 mmol, 1eq.) 4-vinylbenzyl chloride were slowly dropped to the reaction mixture. After complete transfer of VBC the reaction was stirred at room temperature for 72 h before diluting it with 300 ml water. Then, the product was extracted with diethyl ether (3 x 300 ml). The organic phase was subsequently washed with brine (3 x 200 ml) and dried over $MgSO_4$ before evaporating the solvent under reduced pressure. The product was obtained as an orange oil (18.5 g, 116 mmol, 84 %).

**Emulsion Polymerization - Latex production:**

The primary particles are produced via a semi-batch emulsion polymerization protocol. In the first phase (core synthesis) a hard and highly crosslinked seed of nanoparticles based on 80 % styrene (St) and 20 % divinyl benzene (DVB) is produced. In the second one (shell synthesis), a much softer, only slightly crosslinked shell, in which 4-vinylbenzyl azide (VBA) is included, is grown around the previously formed particles. The shell usually contains 2 % DVB, which acts as the crosslinker while the ratio between St and VBA can be varied to tune final product properties. These two steps are done continuously, thus directly feeding the mixture required for the shell after the core synthesis.

**Core Synthesis (step a):**

A mixture of water and sodium dodecyl sulfate (SDS) is initially charged into the glass reactor and the temperature is set to 70°C (Initial Charge, IC, see Table 1). Once this setpoint is reached, a solution of water and initiator (potassium persulfate, KPS) is injected (Initiator Shot 1, IS1, see Table 1). In order to guarantee starved polymerization conditions, an emulsion of styrene, DVB, water, and surfactant is fed over the reaction time using an HPLC pump (Charged Feed 1, CF1, see Table 1). The reacting mixture is constantly monitored. Checking the conversion is important to ensure that the system is kept under starved operation conditions. In the examples given here the reaction time was about 3 hours.

**Shell Synthesis (step b):**

The previously synthesized latex acts as a seed for the growth of a soft shell around the hard core particles. A new monomer solution (Charged Feed 2, CF2, see Table 1), that is composed of (i) styrene, DVB and VBA or (ii) an emulsion of monomers in water, is then fed to the system in a continuous way (i.e., without lag time or stopping the previous reaction of core synthesis), in order to achieve a radially homogeneous shell growth a shot of water and KPS is added to the reaction to keep it proceeding (Initiator Shot 2, IS2, see Table 1). Also during this stage the reacting mixture is constantly monitored in terms of conversion to ensure starved operating conditions. After the new monomer addition is complete, the synthesis is stopped once full conversion and the desired particle size are obtained. In the examples given here the reaction time was about 3 hours.

Table 1: Compositions of reactants for the Latex production, Latex Recipe for ML-P-14, as well as particle characterization:

| | Units | Core | | | Shell | |
|---|---|---|---|---|---|---|
| | | IC | IS1 | CF1 | CF2 | IS2 |
| H2O | g | 650 | 100 | 45 | | 12 |
| Styrene | g | | | 32 | 17.3 | |
| DVB | g | | | 8 | 0.6 | |
| VBA | g | | | | 11.25 | |
| SDS | g | 4.1 | | 1.33 | | |
| KPS | g | | 1.5 | | | 0.325 |
| Diameter | nm | 28 | | | 37 | |
| PDI | | 0.06 | | | 0.06 | |

**Latex Characterization:**

During production, the latex is monitored in terms of particles size distribution, determined by dynamic light scattering (DLS) using a Zetasizer Nano ZS from Malvern, and monomers conversion, determined from the dry mass fraction of the sample. For the latter, the latex is spread over quartz sand and analyzed at 120°C in air using a HG53 Moisture Analyzer from Mettler-Toledo. For the results see table 1.

**Reactive Gelation, Latex Swelling (step c):**

The latex of primary particles is diluted with deionized water up to the desired dry mass fraction and is swollen by an additional mixture made of DVB and oil-soluble initiator azobisisobutyronitrile (AIBN). The chosen amount of added DVB is usually 20 wt% with respect to the mass of solid polymer. The shell is much less crosslinked than the core and thus this additional monomer will swell only the outer layer of the particles. The initiator is adjusted to 5 wt% with respect to the added monomer (e.g. DVB). The obtained dispersion of swollen particles was then kept under stirring overnight at room temperature to ensure complete equilibration at 200 rpm.

**Reactive Gelation, High Shear Destabilization (step d):**

The swollen latexes were then destabilized using the high shear device HC-5000 (Microfluidics, Westwood, MA, U.S.A.) equipped with a L30Z microchannel (rectangular crosssection of 5.76 × 10-8 m2, length of 5.8 mm), through which the suspension is pushed by a membrane pump. At the outlet, micron size clusters of primary particles, or aggregates, are formed. In the following, this device will simply be called "microchannel". According to the specifications provided by the manufacturer, the generated shear rate values are correlated to the pressure drop of the channel itself, $\Delta P$, through the empirical relationship:

$$\dot{\gamma} = 2.27 \times 10^5 \cdot \Delta P^{0.64} \qquad (1)$$

where $\Delta P$ is given in bar and the shear rate $\dot{\gamma}$ results in 1/s; this relationship is valid in a range of $\Delta P$ values between 80 and 160 bar. In this work all samples have been aggregated using a constant $\Delta P$ of 120 bar, corresponding to a flow rate inside the channel of 918 mL/min, a residence time of 0.94 ms and a shear rate $\dot{\gamma}$ of $4.8 \times 10^6$ 1/s. It is worth pointing out that the limiting factor of the setup to form aggregates are the operational limits of the pump. Indeed, it is observed experimentally that flooding occurs when a latex with a too high dry solid content was passed through the microchannel, with head and piston housing clogged by polymer. Such clogging affects the process and the product quality significantly. The solid dry content of the passed latexes is fixed to 8 %. The suspension of aggregates exiting from the microchannel was immediately re-suspended in deionized water and diluted approximately ten times and transferred into a three-neck flask. This is necessary so that the aggregates do not get in contact with air and remain wet. Moreover, the dilution assures that they remain segregated during the post-polymerization phase, in order to avoid the formation of polymer lumps. Aggregation extent (called "conversion" in the following) is measured by quantifying the amount of aggregates with respect to the initial mass of polymer. This is done by precipitating the aggregates from the continuous phase by centrifugation, separating them from residual primary particles (and very small aggregates), after which they are dried and weighted.

**Post-polymerization (step e):**

The clusters of primary particles produced by aggregation in the microchannel are not very durable, because they are held together only by Van der Waals forces. In order to improve the mechanical properties of the aggregates, an additional polymerization step is carried out taking advantage of the monomer/crosslinker added during the swelling step before the highshear treatment; this step is called the post-polymerization. The three-neck flask containing the aggregates is immersed in an oil bath at room temperature and connected to a central overhead stirrer, a reflux condenser and a mild flow of pure nitrogen. Then, the temperature is raised to 70°C and the speed of the impeller is set to 100 rpm in order to keep the system well-stirred but at low shear. After one hour, the nitrogen flow is stopped and the system is left reacting for at least twelve hours. Finally, the latex is first filtered with a 200 μm mesh to remove possible large polymer lumps that might form during this treatment, and then dialyzed on a 10 μm mesh for several minutes to clear out residual primary particles.

**Product Characterization:**

As the aggregates produced are in micrometer range, their size and internal structure is characterized by static light scattering (SLS). Samples are highly diluted and then analyzed using a Mastersizer 2000 (Malvern Instruments, Worcestershire, UK). The scattered light intensity could be used to evaluate the average structure factor (*q*) of the aggregates, defined as

$$\langle S(q)\rangle = \frac{I(q)}{I(0)P(q)} \qquad (2)$$

where q is the magnitude of the scattering vector (defined as $\frac{4\pi n}{\lambda}\sin\frac{\theta}{2}$, with n refractive index of the continuous phase, λ wavelength in vacuum, and θ scattering angle), I(0) the scattered intensity at zero angle, I(q) the angle-dependent scattered intensity and P(q) the form factor of the primary particles measured using the same instrument. In order to relate the average structure factor to the radius of gyration, the Guinier approximation is used (Sorensen, C. M. Light scattering by fractal aggregates: A review. Aerosol Sci. Technol. Am. Assoc. Aerosol Res, 2001, 35, 648-687):

$$\langle S(q)\rangle = \exp\left(-\frac{q^2\langle R_g^2\rangle_{S(q)}}{3}\right) \qquad \left(q\langle R_g\rangle_{S(q)} < 1\right) \qquad (3)$$

where the root-mean square radius of gyration of the aggregates, $\langle R_g^2\rangle$, and the radius of gyration of the primary particles, $R_{g,p}$ are expressed as $\langle R_g^2\rangle = \langle R_g^2\rangle_{S(q)} + \langle R_{g,p}^2\rangle$ and $R_{g,p} = \sqrt{3/5}R_p$, respectively. Therefore, indications concerning the average cluster size, in terms of radius of gyration ($\langle R_g\rangle$), can be obtained from the position of the bending of the curve in the double logarithmic plot. Notably, the contribution of the primary particles is significant only for aggregates of small size and, therefore, it is not relevant in our case, where clusters with average size of several microns are produced and residual primary particles have been removed. The same measurement technique provides additional information about the internal structure and the fractal dimension ($d_f$) of the aggregates. As a matter of fact, the Rayleigh-Debye-Gans theory may be applied where the power-law region of the average structure factor $\langle S(q)\rangle$, when plotted as a function of *q* on a double logarithmic plot, yields a straight line whose slope is equal to - $d_f$, i.e., $\langle S(q)\rangle \propto q^{idf}$. If clusters are compact enough, the particle size distribution can be derived as well by applying Mie theory, which assumes that the particles are spherical.

The overall surface area of the produced materials is evaluated by nitrogen adsorption measurements through the Brunauer-Emmett-Teller (BET) equation. Two different instruments were used, TriStar3000 (Micrometrics, Norcross, GA, U.S.A.) and Quadradsorb (Quantachrome, Odelzhausen, Germany).

Pore size distribution and total porosity of the aggregates are measured by mercury intrusion porosimetry (equipment Pascal 140 and Pascal 440, Thermo Scientific, Waltham, MA, U.S.A.).

In several samples, a clear distinction between internal and external porosity could not be made in the measurements. Therefore, pores bigger than those intruded by Hg at atmospheric pressure (i.e., equal to or larger than 15 μm according to the Washburn equation) are considered as external voids.

Visual inspection of the aggregates is performed by Scanning Electron Microscopy (Gemini 1530 FEG, Zeiss, Oberkochen, Germany).

The results are given in Table 2.

Table 2: characterization of the example particles ML-P-14:

| Primary particles | |
|---|---|
| Core size [nm] | 28 |
| Core + shell size [nm] | 37 |
| PDI | 0.06 |

(continued)

| Aggregated micro clusters | |
|---|---|
| Pore size distribution (mercury intrusion) | 0.5-10 µm |
| Surface area [m2/g] by BET | 12 |
| packing at 6 mL/min | Pressure drop: 0.2 bar/cm |
| Packing at 9 mL/min | Pressure drop: 0.4 bar/cm |

Figure 1 shows the narrow particle size distribution by way of the micro-cluster size particle diameter distribution.
Figure 2 shows the pore size distribution of the base material ML-P-14.

**Packing:**

The produced materials have been slurry packed into a GE Tricorn Column of 50 mm length and 5 mm inner diameter. The applied packing procedure consisted of housing the clusters in the column and in the reservoir, and packing them in water with flow rates of up to 9 ml/min. It was observed that during the packing step the pressure drops were extraordinarily low even if the packing was carried out at very high velocities.
This is graphically represented and compared with commercially available packing material in figure 3. For comparative purposes the ML-P-14 according to the present invention is compared with POROS® as available from Thermo Fisher Scientific (poros 50 HS, 50 µm, prore diameter: 0.05 - 1 µm)as well as with Eshmuno® CPX as available from Merck Millipore (Esshmuno CPX, 50 µm particles, pore diameter < 0.3 µm)

**Click-Reactions**

<u>A) Preparation Protein A Materials</u>

*Example 1 - Single Point Attachment - Click reaction inside a column:*

***Production of ML-C-82:*** This example represents the functionalization of a column, which had been packed with ML-P-14 with propargyl glycidyl ether to provide a column material with epoxide groups on the surface. A reaction mixture containing 20 µl propargyl glycidyl ether, 67.3 mg $CuSO_4$, 290.4 mg L-sodium ascorbic acid, 30 ml water, and 25 ml DMF was prepared and flushed with nitrogen. Using an HPLC pump the reaction mixture was circulated through a column packed with ML-P-14 with 0.1 ml/min at room temperature for 72 hours. Afterwards, the column material was washed with 0.1 M EDTA solution at 0.1 ml/min for 12 h followed by another washing step with water at 0.1 ml/min for 2h. The yield (97%) was estimated by FT-IR measurement.
***Production of ML-C-87:*** In a second reaction cysteine terminated protein A (Cys-SPA) was immobilized by thiolepoxide click reaction. Firstly, 155 mg Cys-SPA were dissolved in 10 ml coupling buffer (0.1 M sodium phosphate, 0.5 M sodium sulfate, pH 7.5). Subsequently, the reaction mixture was circulated through the column (ML-C-82) with 0.1 ml/min at room temperature for 72 h. Afterwards, the column was washed with 0.1 M ethanol amine in coupling buffer for 4 h. Subsequently, the column was flushed with washing buffer for 1 h.
The materials were tested for chromatographic performance using the working conditions as given in table 3.

Table 3: Protein A resins working conditions:

| Step | Flow rate [mL/min] | Volume [CV] | Buffer |
|---|---|---|---|
| Equilibration | 0,5 | 3 | 20 mM phosphate, 150 mM NaCl, pH 7.5 |
| Loading | 0,3 | 8 | 4,3 mg/mL mAb20 pool |
| Wash 1 | 0,5 | 3 | 20 mM phosphate, 150 mM NaCl, pH 7.5 |
| Wash 2 | 0,5 | 3 | 20 mM phosphate, 1 M NaCl, pH 7.5 |
| Wash 3 | 0,5 | 3 | 20 mM phosphate, 150 mM NaCl, pH 7.5 |
| Elution | 0,5 | 4 | 50 mM citric acid, pH 3.0 |
| Re-equilibration | 0,5 | 5 | 20 mM phosphate, 150 mM NaCl, pH 7.5 |

Figure 4 shows the breakthrough curves for different flow rates for the material ML-C-87 showing the clear separation between the loading and outflow of impurities until about 15 mL and the narrow product elution peak after 20 mL which are essentially independent of the flow rate.

Figure 5 shows the dynamic binding capacity of ML-C-87 for different percentages. Figure 6 shows a Van-Deemter plot for a column with ML-C-87, wherein molecules of different sizes are compared (sodium azide, Mw: 65 Da, Chymotripsinogen A (65.7 kDa) and a protein standard (HiMark™ Pre-stained Protein Standard by Thermo Fischer, 30-460 kDa) One can see that the chromatographic performance remains the same even at high flow rates. This is because of the macrosized pores, which make the mass transport dominated by convection.

*Example 2 - Single Point Attachment - Click reaction in bulk*

***Production of ML-C-104***: This example represents the functionalization of the base material (ML-P-14) by click chemistry in bulk. In a 250 ml round bottom flask 302.1 mg ML-P-14, 40 μl propargyl glycidyl ether, 129. 4 mg $CuSO_4$, 401.0 mg L-sodium ascorbic acid and 100 ml DMF were charged and gently stirred at room temperature for 72 hours. Afterwards, the obtained material was filtrated and exhaustively washed with water and stirred in 0.1 M EDTA solution overnight. The material was packed as a slurry in a GE Tricorn Column and again washed overnight with 0.1 M EDTA solution. Lastly, the column was flushed with coupling buffer (0.1 M sodium phosphate, 0.5 M sodium sulfate, pH 7.5). Yield: 98 %.

Figure 7 shows the breakthrough curves for different flow rates for the material ML-C-104 showing the clear separation between the loading and outflow of impurities until about 15 mL and the narrow product elution peak after 20 mL which are essentially independent of the flow rate.

Figure 8 shows a comparison of the dynamic binding capacity of the two materials ML-C-87 and ML-C-104, showing that in this respect the difference between click reaction in bulk and click reaction inside a column is not significant.

Figure 9 shows a comparison of the pressure drops of the two materials ML-C-87 and ML-C-104, showing that in this respect the difference between click reaction in bulk and click reaction inside a column is significant, click reaction in the column leading to a lower pressure drop.

***Production of ML-C-105***: In a second reaction cysteine terminated protein A (Cys-SPA) was immobilized by thiolepoxide click reaction. Firstly, 155 mg Cys-SPA were dissolved in 10 ml coupling buffer (0.1 M sodium phosphate, 0.5 M sodium sulfate, pH 7.5). Subsequently, the reaction mixture was circulated through the column (ML-C-104) with 0.1 ml/min at room temperature for 72 h. Afterwards, the column was washed with 0.1 M ethanol amine in coupling buffer for 4 h. Subsequently, the column was flushed with washing buffer for 1 h.

*Example 3 - Multi Point Attachment - Click reaction in bulk*

***Production of ML-C-106*:** This example represents the functionalization of the base material (ML-P-14) towards NHS containing materials by click chemistry in bulk. In a 250 ml round bottom flask 301.4 mg ML-P-14, 29.5 mg Propargyl-N-hydroxysuccinimidyl ester, 131.5 mg $CuSO_4$, 399.5 mg L-sodium ascorbic acid and 100 ml DMF were charged and gently stirred at room temperature for 72 hours. Afterwards, the obtained material was filtrated and exhaustively washed with water and stirred in 0.1 M EDTA solution overnight. The material was packed as a slurry in a GE Tricorn Column and again washed overnight with 0.1 M EDTA solution. Lastly, the column was flushed with coupling buffer (0.1 M sodium phosphate, 0.5 M sodium sulfate, pH 7.5). Yield: 94 %.

***Production of ML-C-107:*** In another reaction native protein A (n-SPA) was immobilized. Firstly, 150 mg n-SPA were dissolved in 15 ml coupling buffer (0.1 M $Na_3PO_4$, 0.15 M NaCl, pH 7.2). Subsequently, the reaction mixture was circulated through the column (ML-C-106) with 0.1 ml/min at room temperature for 3 h. Subsequently, the column was flushed with washing buffer for 1 h.

B) Preparation Ion-Exchange Materials

***Production of ML-C-28 (Cation Exchanger)*:** A mixture of ML-R-6 (272 mg), 108 mg CuSO4, 401 mg L-sodium ascorbic acid, DMF (20 mL), and water (100 mL) was prepared. Subsequently, the reaction mixture was circulated through the column (packed with ML-P-14) at 0.1 ml/min at room temperature for 72 h. Afterwards, the column was washed with 0.1 M EDTA solution for 24 h followed by another washing step with water for 2 h. Figure 10 shows the chromatogram of a column packed with ML-C-28 tested with a mixture of alpha-chymotrypsinogen, cytochrome C and lysozyme.

***Production of ML-C-55 (Anion Exchanger)*:** A mixture of ML-R-7 (192 mg), 115 mg $CuSO_4$, 323 mg L-sodium ascorbic acid, DMF (20 mL), and water (100 mL) was prepared. Subsequently, the reaction mixture was circulated through the column (packed with ML-P-14) at 0.1 ml/min at room temperature for 72 h. Afterwards, the column was washed with 0.1 M EDTA solution for 24 h followed by another washing step with water for 2 h.

C) Preparation of Hydrophobic Interaction Materials

Thermoresponsive polymer brushes have been synthesized with tunable lower critical solution temperature (LCST) based on polydi(ethylene glycol) methyl ether methacrylate-co-poly(ethylene glycol) methyl ether methacrylate bearing a terminal alkyne group. Moreover, alkanes with alkyne moieties are commercially available. Clicking these molecules onto the base material was easily possible.

**Synthesis of chromatography ligands:**

***Production of ML-RE-1(alkyne terminated RAFT-agent)*****:** In a 100 ml round flask a solution of 4-Cyano-4-(phenylcarbonothioylthio)pentanoic acid (CTA) (499.2 mg, 1.79 mmol, 1 eq.) and Propargyl alcohol (PA) (0.4 ml, 6.9 mmol, 4 eq.) in 20 ml of DCM was stirred and cooled to 0°C (ice-bath). After 1h, N-(3-Dimethylaminopropyl)-N'-ethylcarbodiimide hydrochloride (EDC) (1.021g, 5.3 mmol, 3 eq.) and 4-(Dimethylamino)pyridine (DMAP) (217 mg, 1.77 mmol, 1 eq.) were added and the mixture was stirred for 24 h. The solution was washed and extracted with water (2x 50 ml) and DCM (2x 50 ml), dried over magnesium sulfate, vacuum filtered, and the solvent removed to give a red oil with a yield of 645 mg. The oil was purified by liquid chromatography, with 42 g silica gel and a mobile phase of 6:1 hexane/ethyl acetate in a column with pore size of 2 and a diameter of 32 mm. (The product can easily be identified in the column as the darkest red fraction). The yield was 250 mg (44%).

***Production of ML-R-6 by RAFT polymerization (negatively charged brush)*****:** In a 100 ml two-necked round flask a solution of ML-RE-1 (234.5 mg, 0.74 mmol, 1 eq), 3-Sulfopropyl methacrylate (SPMAK) (0.6 g, 2.41 mmol, 3.3 eq.), DMF (4.6 g), and phosphate buffer (8.4 g) was heated to 65°C under nitrogen flow and constant stirring. After 1 h 4,4'-Azobis(4-cyanopentanoic acid) (ACVA) (60 mg, 0.21 mmol) was added. 24hr later the brown solid was washed with acetone and DMF, dried, and mortared resulting in a brown powder. This was washed with DMF and acetone and dried. Yield: 0.57 g.

***Production of ML-R-7 by RAFT polymerization (positively charged brush)*****:** In a 100 ml two-necked round flask a solution of ML-RE-1 (191.5 mg, 0.6 mmol, 1 eq.), 2-(Methacryloyloxy) ethyl trimethyl ammonium chloride (MADQUAT) (1.49 g, 7.2 mmol, 12 eq.), DMF (4 g), and buffer (7 g) was heated to 65°C under nitrogen flow and constant stirring. After 1 h ACVA (69 mg, 0.25 mmol) was added. After 24 h the brown solid was washed with acetone and DMF, dried, and mortared resulting in a brown powder. This was, again, washed with DMF and acetone and dried. Yield: 1.08 g.

**Production of ML-A-58 by ATRP (thermoresponsive brush):** In a 20 ml schlenk tube 871 mg of di(ethylene glycol) methyl ether methacrylate solution (95 % in water), 45 mg poly(ethylene glycol) methyl ether methacrylate ($M_n$ = 500) were charged. In a second schlenk tube 50 mg propargyl 2-bromoisobutyrate (PBIB) were charged and dissolved in 10 ml isopropanol. Both mixtures were evacuated by three freeze-thaw cycles. After the last thawing round the PBIB containing solution was cannula transferred to the schlenk tube containing the monomers. $CuSO_4$ and L-sodium ascorbic acid were added to the reaction solution under nitrogen counter stream. The reaction was heated up to 60 °C and stirred for 4 h. Afterwards, the reaction was quenched by exposing the mixture to air. The final mixture was diluted in ethanol and passed through a short silica column (60-200 mesh) in order to remove copper catalyst.

In figure 11 a schematic production of functionalized microporous chromatography materials is shown. In the first step (1) the synthesis of core-shell particles with azide functionality by emulsion polymerization is shown. In the second step (2) the aggregation of primary particles under shear using a Z-shaped microchannel is shown. In step (3) it is shown how the obtained micro-clusters are dispersed in water. In step (4) it is shown how these particles are packed as a slurry in a column before functionalization. After the column is packed, as illustrated in step (5), a solution of alkyne containing chromatography ligands (pH-responsive brushes, thermal responsive brushes, peptides, etc., step (6)) is circulated to immobilize desired ligands on the polymeric scaffold by CUAAC. After flushing the column with brine and acetate buffer to remove the catalyst to pure chromatography column with high functionality is obtained, and the column is ready to be used for separation of biological mixtures.

LIST OF REFERENCE SIGNS

| | | | |
|---|---|---|---|
| AIBN | azobisisobutyronitrile | RAFT | Reversible addition-fragmentation chain-transfer |
| CUAAC | copper(I)-catalyzed alkyne-azide cycloaddition | | |
| DLS | dynamic light scattering | SDS | Sodium dodecyl sulfate |
| DMF | N-dimethylformamide | SLS | static light scattering |
| DVB | divinyl benzene | St | Styrene |
| KPS | potassium persulfate | VBA | 4-vinylbenzyl azide |
| NHS | N-hydroxysuccinimide | | |
| PDI | polydispersity index | | |

## Claims

1. Method for preparing surface-functionalized macroporous micro-clusters comprising at least the following individual steps in given order:

   a) synthesis of dispersed cross-linked polymeric latex primary core particles starting from at least one monomer or oligomer in an emulsion polymerization under starved conditions;
   b) synthesis of a shell layer on the surface of the primary core particles to form core-shell particles starting under starved conditions from the same at least one monomer or oligomer as in step a) and in addition to that at least one additional azide monomer;
   c) swelling of the core-shell particles with a liquid comprising at least one of the monomers or oligomers as used in a) as well as a polymerization initiator, but preferably no azide monomer such as the additional azide monomer from step b);
   d) formation of agglomerates of the particles by application of shear;
   e) polymerization of the agglomerates to form the macroporous micro-clusters;
   f) direct or indirect surface-functionalization of the agglomerates by way of catalyzed or strain promoted azide-alkyne cycloaddition with the azide introduced in step b).

2. Method according to claim 1, wherein the at least one monomer used in steps a)-c) is selected from the following group: styrene based monomers, acrylic acetate based monomers, vinyl acetate based monomers or a combination thereof, wherein preferably at least one of styrene and divinylbenzene are used, most preferably a combination of styrene and divinylbenzene.

3. Method according to any of the preceding claims, wherein the additional azide monomer used in step b) is selected from the group consisting of: vinyl benzyl azide, azidoalkyl methacrylate, azidoalkyl acrylate, wherein preferably the alkyl moiety is a linear saturated aliphatic chain having 1-7, preferably 2-4 carbon atoms, wherein preferably it is selected as para-vinyl benzyl azide.

4. Method according to any of the preceding claims, wherein the monomers used in step a)-c) are selected to be at least one of styrene and divinylbenzene, and wherein the additional azide monomer in step b) is selected to be para-vinyl benzyl azide.

5. Method according to claim 4, wherein
   in step a) a mixture of styrene and divinylbenzene is used, preferably in a weight proportion in the range of 60:40-95:5, most preferably in a weight proportion in the range of 75:25-90:10, wherein
   in step b) a mixture of styrene and para-vinyl benzyl azide, or a mixture of styrene, divinylbenzene and para-vinyl benzyl azide is used, wherein preferably the weight proportion is selected as follows:

   50-80 %, preferably 60-70% styrene;
   0-10%, preferably 1-5% divinylbenzene;
   10-50%, preferably 30-45% and para-vinyl benzyl azide;
   wherein the components supplement to 100% by weight;

   and wherein
   in step c) a mixture of styrene and divinylbenzene is used, wherein preferably a weight proportion in the range of 95:5-60:40, preferably in the range of 90:10-70:30 is used.

6. Method according to any of the preceding claims, wherein during step d) a microfluidic flow through mixing device is used,
   and/or wherein during step d) a shear rate in the range of $1 \times 10^5 - 1 \times 10^8\ s^{-1}$, preferably in the range of $1 \times 10^6 - 1 \times 10^7\ s^{-1}$ is applied.

7. Method according to any of the preceding claims, wherein in step a) a core particle with a higher degree of cross-linking is generated than the cross-linking of the shell in step b), wherein preferably this is achieved by adding a smaller amount and/or different and weaker type of cross-linking agent and/or initiator agent in step b), wherein preferably the cross-linking agent can be selected as one selected as DVB and/or the initiator agent is selected as one selected from the following group: persulfate, preferably potassium persulfate, AIBN.

**8.** Method according to any of the preceding claims, wherein step f) is carried out before introducing the macro porous micro-clusters into a chromatographic separation column.

**9.** Method according to any of the preceding claims, wherein step f) is carried out after packing the macro porous micro-clusters into a chromatographic separation column and after packing and an optional first equilibration and/or washing, wherein the macro porous micro-clusters are surface functionalized in step f) while being located in the column, and wherein, and after washing and an optional first equilibration the column is used for chromatographic separation.

**10.** Method according to any of the preceding claims, wherein step f) involves the attachment of an amino acid-based molecule, in particular peptide, oligo peptide, or a protein, wherein the amino acid-based molecule can optionally first be chemically modified to be suitable for click chemistry by introducing a alkyne functionality, including by SPI, or by indirect attachment on a epoxy surface or NHS surface, and/or the attachment of copolymers of alkyloxy, acrylate moieties, styrene di(ethylene glycol) methyl ether methacrylate, poly(ethylene glycol) methyl ether methacrylate, poly(ethylene glycol) methyl ether acrylate, bearing at least one terminal or sidechain alkyne group, or alkyne functionalized poly(2-ethyl-2-oxazoline) and/or the attachment of an alkyne functionalized RAFT-agent, or alkyne functionalized ATRP initiator.

**11.** Method according to any of the preceding claims, wherein in step f) at least one of copper (I) catalyzed azide-alkyne-click-chemistry or copper free click chemistry is used, preferably for the generation of polymer brushes or for attaching amino acid-based functionalizations.

**12.** Method according to any of the preceding claims, wherein the surface-functionalization in step f) is
either carried out directly with the azide introduced in step b) and using at least one alkyne reactive group carrying surface modification moiety,
or is carried out indirectly with the azide introduced in step b), by first reacting the azide on the surface with an intermediate bifunctional reactant providing an alkyne functionality as well as another different functionality allowing then the attachment of an actual surface modification moiety, wherein preferably the other different functionality of the bifunctional reactant is an epoxy group or a N-hydroxysuccinimide moiety group, and wherein the other different functionality is then used for subsequent functionalization of the agglomerates with surface modification moieties, wherein preferably the intermediate bifunctional reactant carrying an alkyne moiety in step f) is selected from the group consisting of: alkyne-functionalized ATRP initiator, preferably selected from the group consisting of 3-butinyl 2-bromoisobutyrate, alkyne-functionalized RAFT agent, preferably selected from the group consisting of prop-2-ynyl 4-benzodithiol)-4-cyanopentanone, 2-nitro-5-(2-propynyloxy)benzyl 4-cyano-4-(phenylcarbono-thioylthio) pentanoatepropargyl 2-bromoisobutyrate.

**13.** Surface-functionalized macro porous micro-cluster obtained or obtainable using a method according to any of the preceding claims.

**14.** Micro-cluster according to claim 13, wherein it has a fractal dimension of at least 2.2, preferably of at least 2.3, most preferably of at least 2.5
and/or wherein it is free or essentially free from pores with a size below 20 nm, or below 40 nm, or below 50 nm;
and/or wherein it has a radius of gyration in the range of 10-100 $\mu$m and/or a surface area SBET in the range of 5-50 $m^2$ per gram.

**15.** Use of a surface-functionalized macro porous micro-cluster according to any of claims 12-13 for chromatographic purification/separation, preferably for the separation of chemical compounds and/or biopharmaceuticals including peptides or monoclonal antibodies, biosimilars, therapeutic proteins, virus like particles, viral vectors, vaccines wherein preferably the micro-clusters are either directly or after grinding used for the separation/purification purposes, including ion chromatography, cation exchange chromatography, anion exchange chromatography, affinity chromatography, HIC.

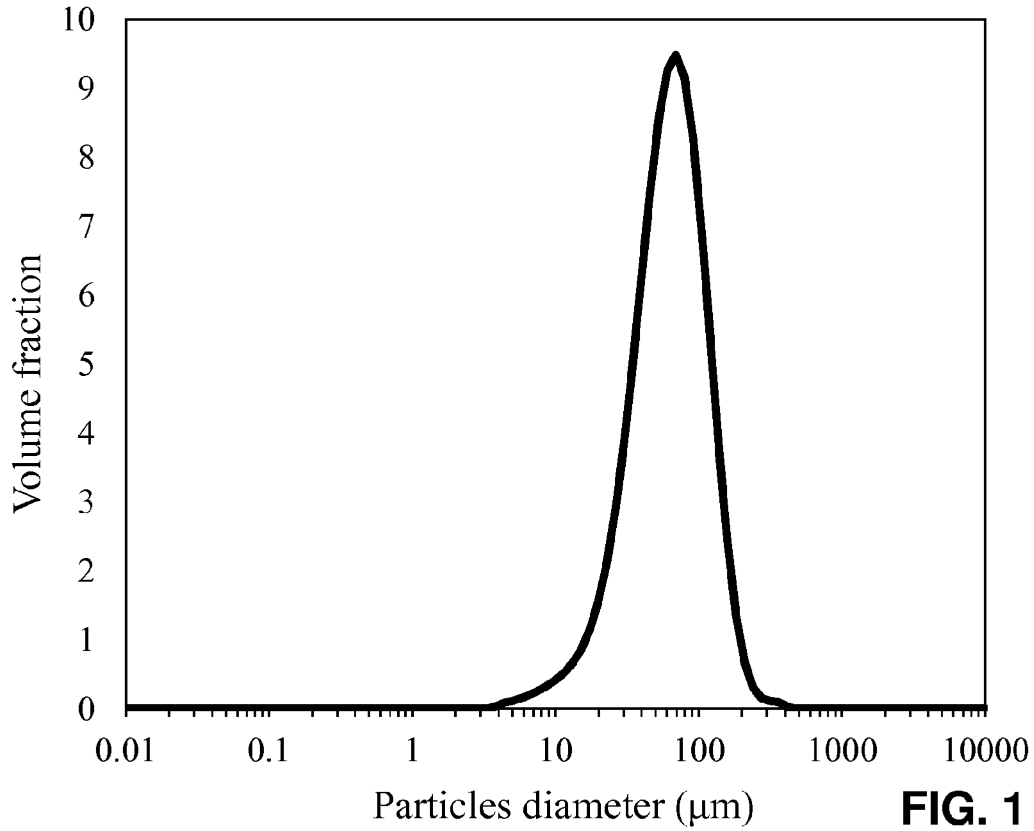
Volume fraction
10
9
8
7
6
5
4
3
2
1
0
0.01
0.1
1
10
100
1000
10000
Particles diameter (μm)

FIG. 1

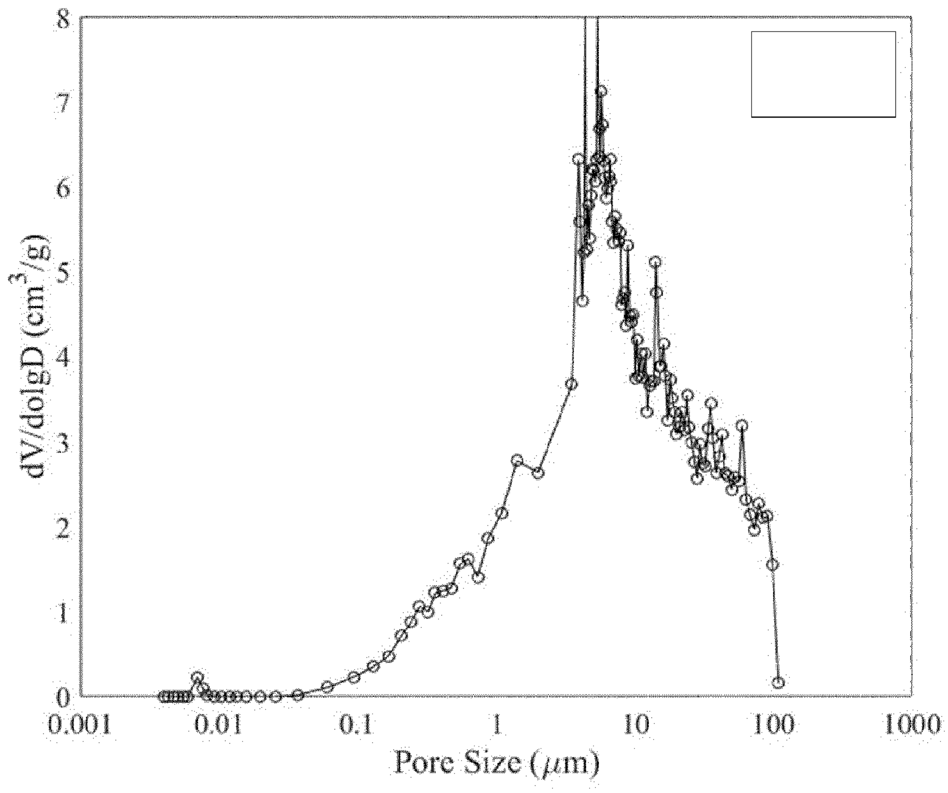
dV/dolgD (cm³/g)
8
7
6
5
4
3
2
1
0
0.001
0.01
0.1
1
10
100
1000
Pore Size (μm)

FIG. 2

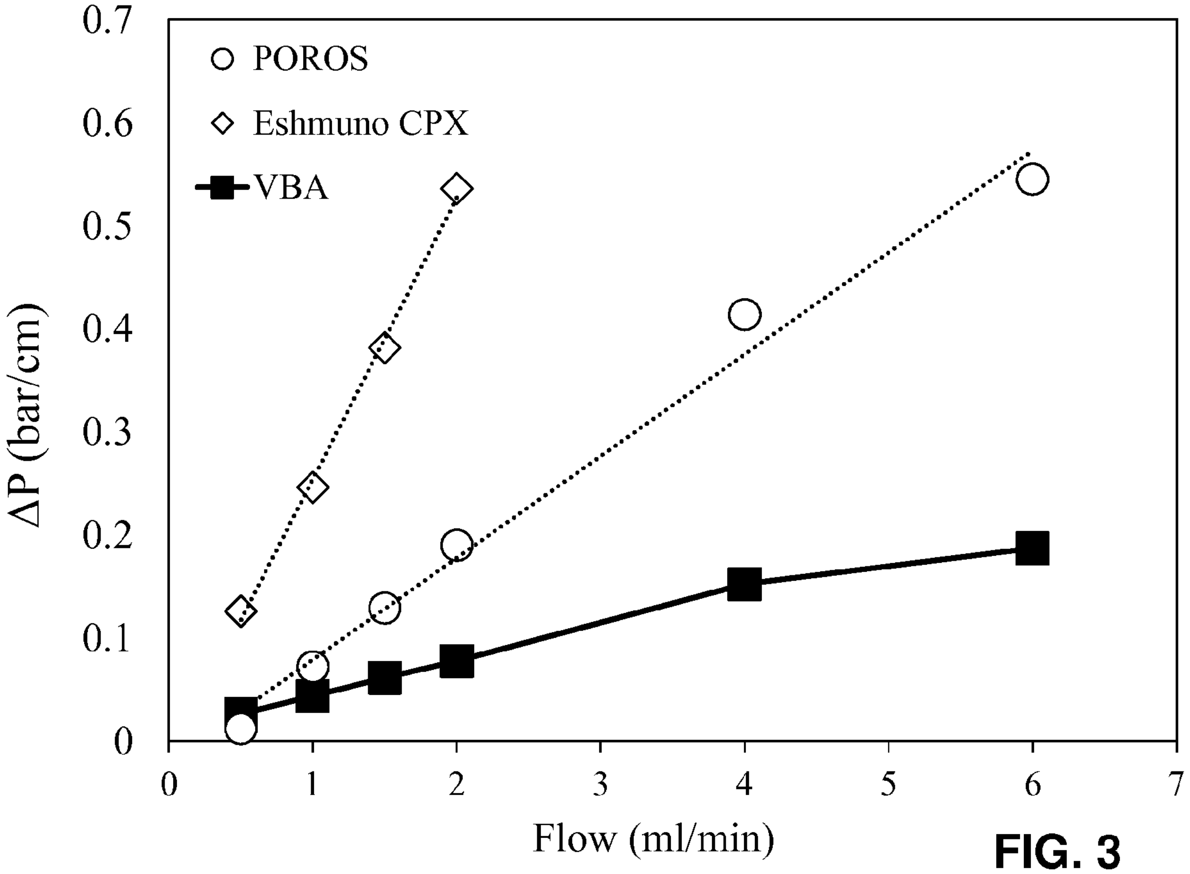
POROS
Eshmuno CPX
VBA
ΔP (bar/cm)
0.7
0.6
0.5
0.4
0.3
0.2
0.1
0
0 1 2 3 4 5 6 7
Flow (ml/min)

FIG. 3

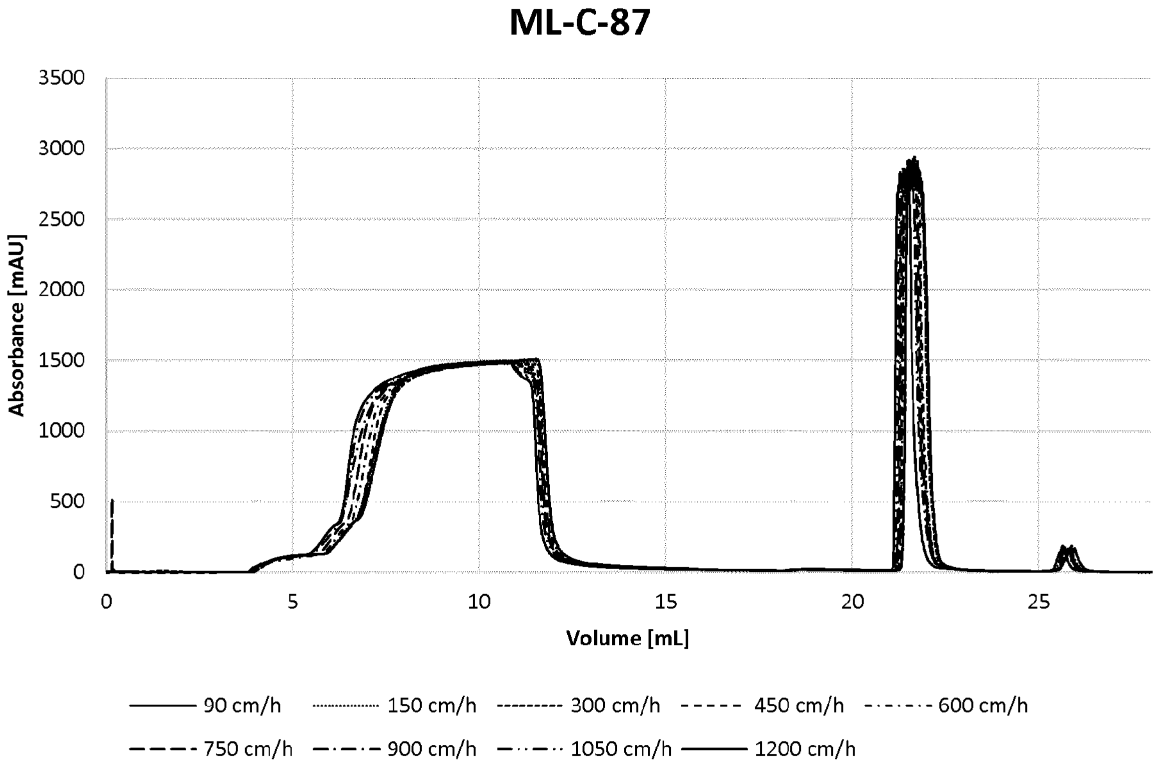
ML-C-87
Absorbance [mAU]
3500
3000
2500
2000
1500
1000
500
0
0 5 10 15 20 25
Volume [mL]
90 cm/h
150 cm/h
300 cm/h
450 cm/h
600 cm/h
750 cm/h
900 cm/h
1050 cm/h
1200 cm/h

FIG. 4

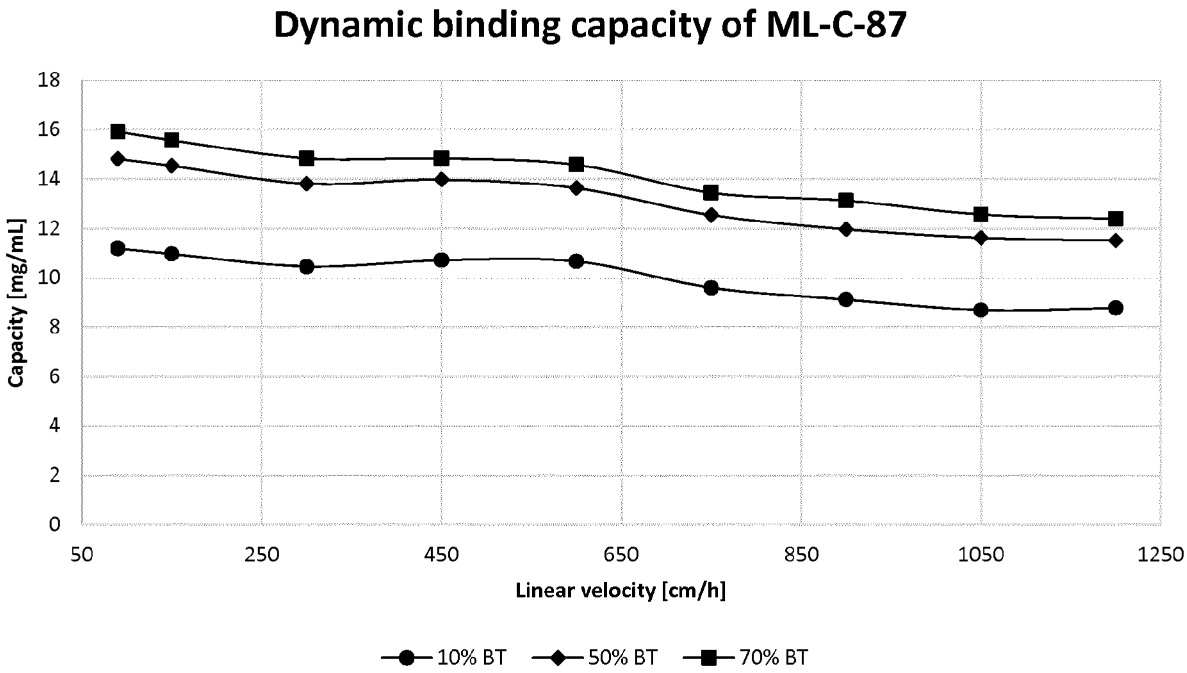
Dynamic binding capacity of ML-C-87
18
16
14
12
10
8
6
4
2
0
Capacity [mg/mL]
50
250
450
650
850
1050
1250
Linear velocity [cm/h]
10% BT
50% BT
70% BT

FIG. 5

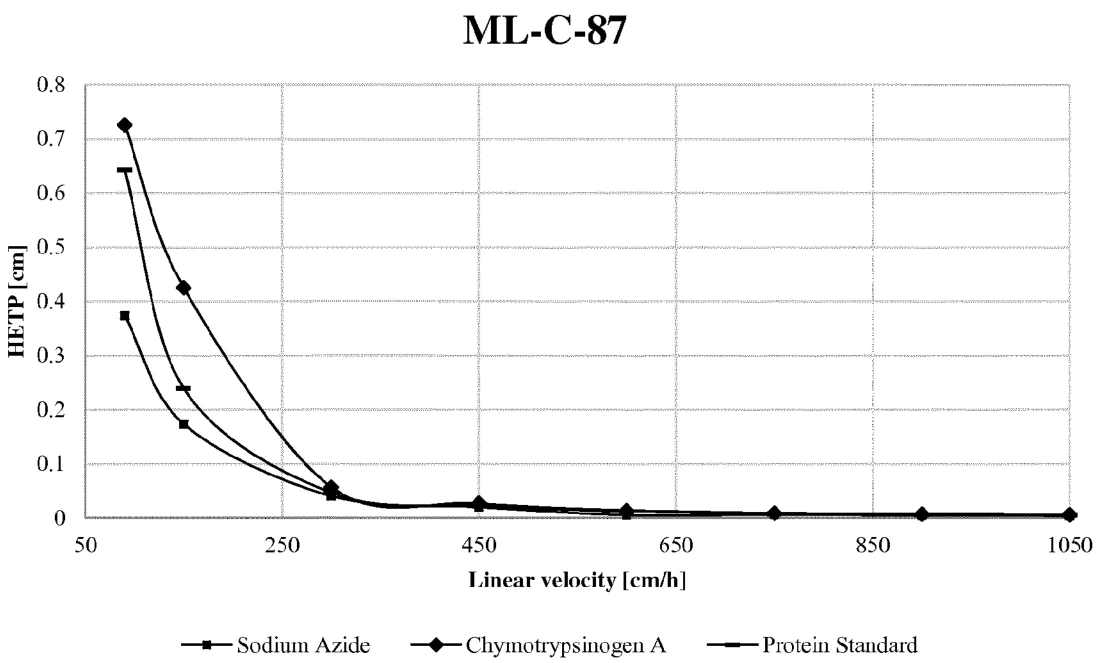
ML-C-87
0.8
0.7
0.6
0.5
0.4
0.3
0.2
0.1
0
HETP [cm]
50
250
450
650
850
1050
Linear velocity [cm/h]
Sodium Azide
Chymotrypsinogen A
Protein Standard

FIG. 6

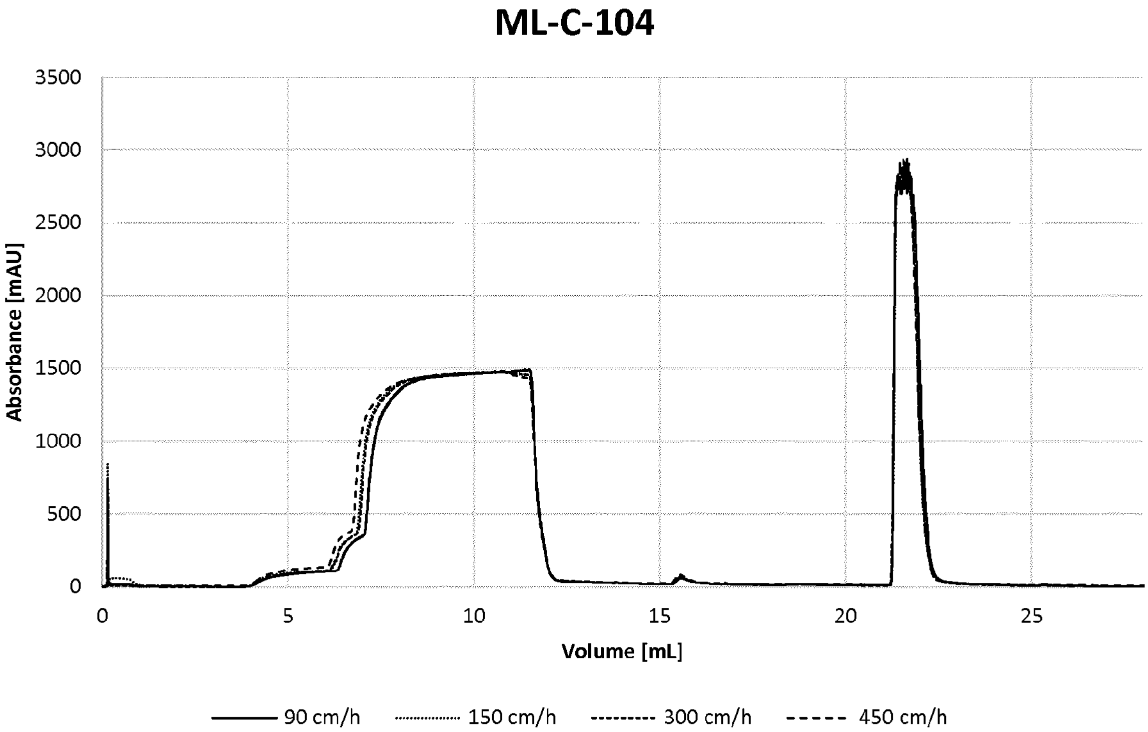
ML-C-104
3500
3000
2500
2000
1500
1000
500
0
Absorbance [mAU]
0
5
10
15
20
25
Volume [mL]
90 cm/h
150 cm/h
300 cm/h
450 cm/h

FIG. 7

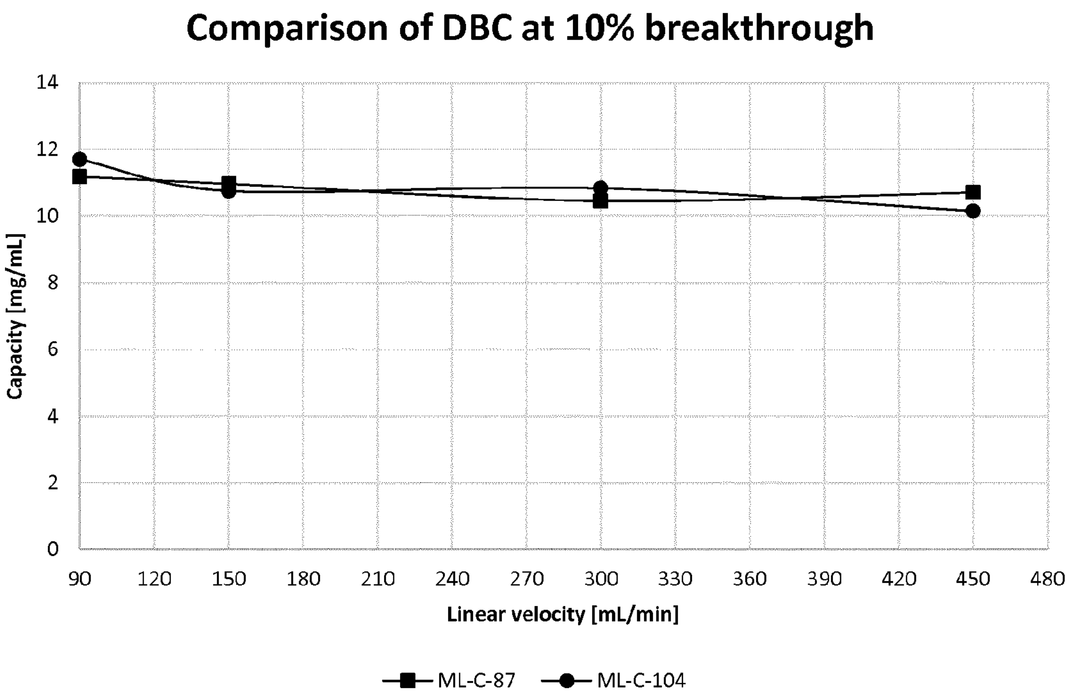
Comparison of DBC at 10% breakthrough
14
12
10
8
6
4
2
0
Capacity [mg/mL]
90
120
150
180
210
240
270
300
330
360
390
420
450
480
Linear velocity [mL/min]
ML-C-87
ML-C-104

FIG. 8

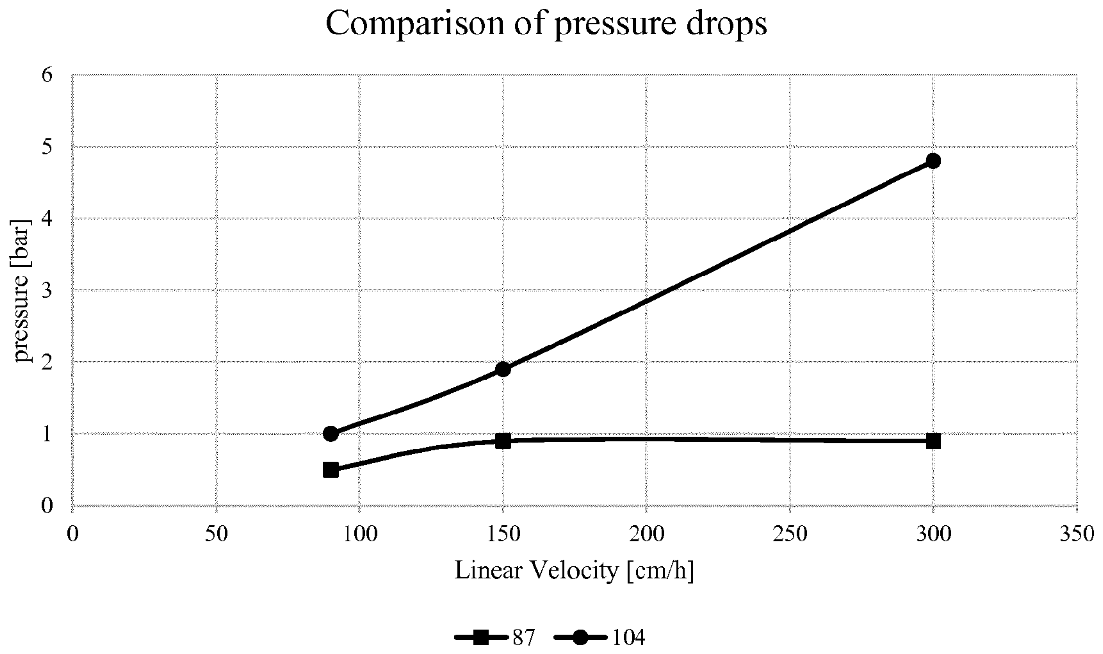
Comparison of pressure drops
pressure [bar]
6
5
4
3
2
1
0
0
50
100
150
200
250
300
350
Linear Velocity [cm/h]
87
104

FIG. 9

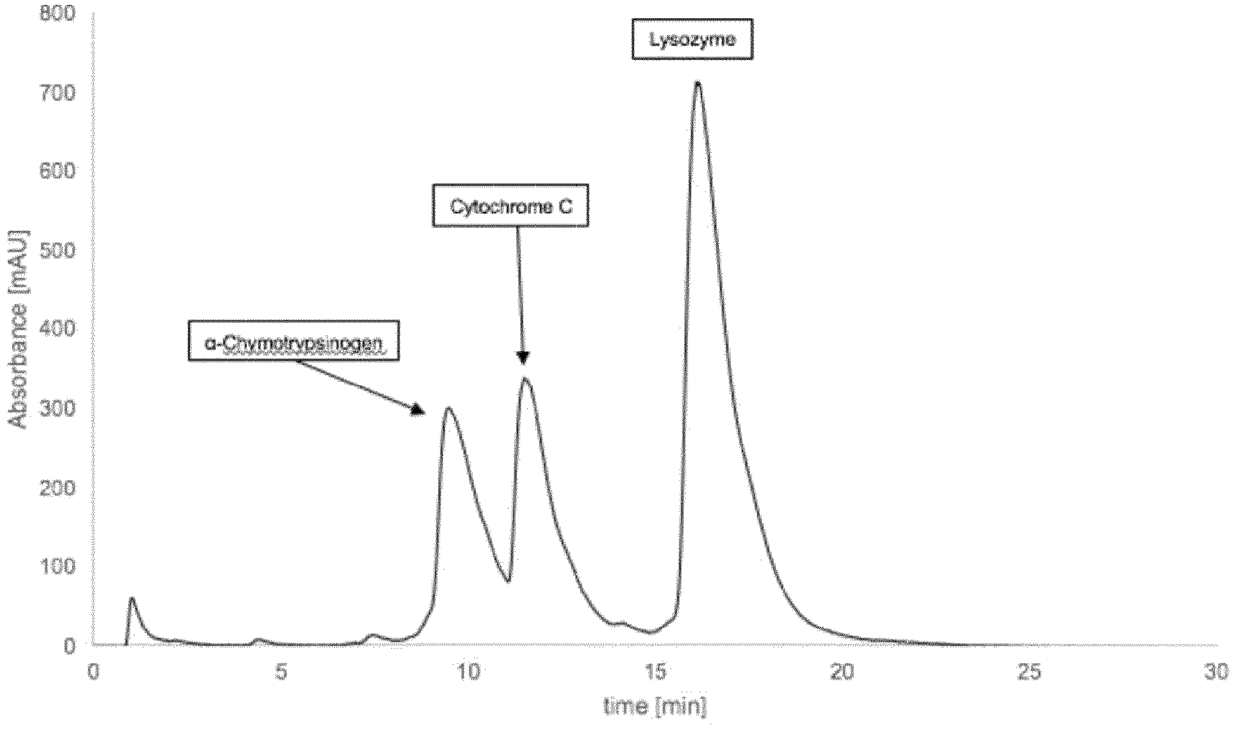
Absorbance [mAU]
800
700
600
500
400
300
200
100
0
Lysozyme
Cytochrome C
α-Chymotrypsinogen
0
5
10
15
20
25
30
time [min]

FIG. 10

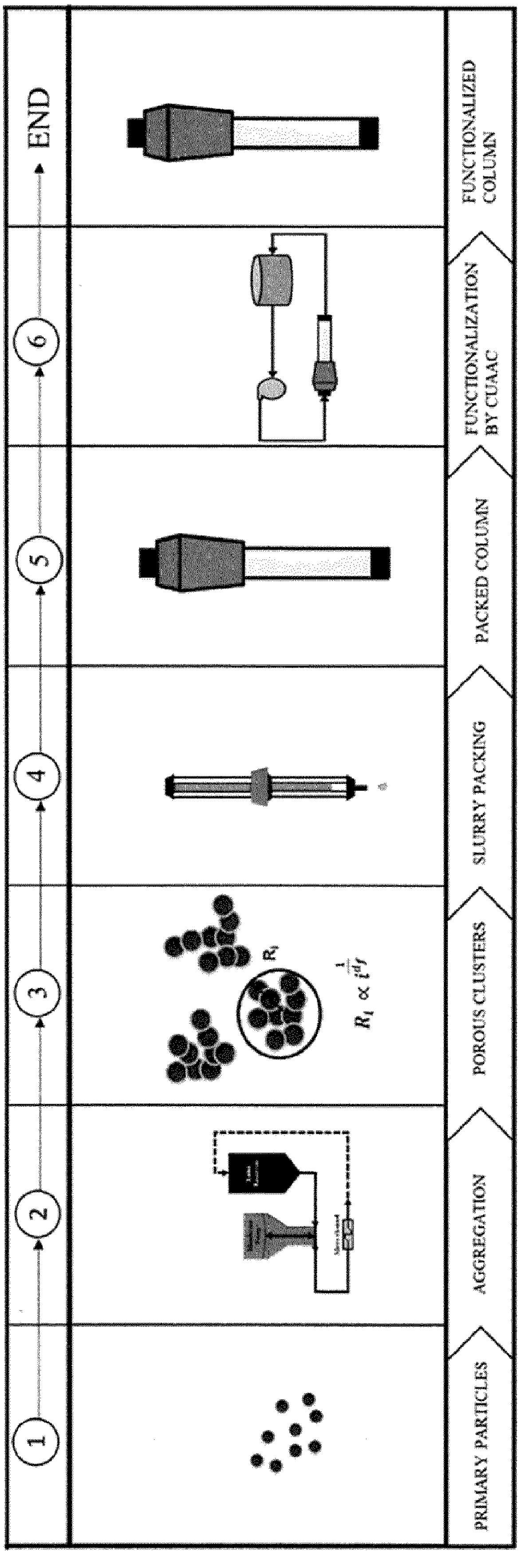
1
2
3
4
5
6
END
R$_l$
$R_l \propto \frac{1}{t^{d_f}}$
PRIMARY PARTICLES
AGGREGATION
POROUS CLUSTERS
SLURRY PACKING
PACKED COLUMN
FUNCTIONALIZATION BY CUAAC
FUNCTIONALIZED COLUMN

FIG. 11

European Patent Office

# EUROPEAN SEARCH REPORT

Application Number
EP 17 20 6161

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2009/043191 A2 (ELDGENOESSISCHE TECH HOCHSCHUL [CH]; MORBIDELLI MASSIMO [CH]; BUTTE AL) 9 April 2009 (2009-04-09)<br>* page 4, line 8 - page 6, line 22 *<br>* page 10, line 5 - page 16, line 30 *<br>----- | 1-15 | INV.<br>B01J20/32<br>C08F257/02<br>B01J20/281<br>C08F2/00<br>C08F212/08<br>C08F2/22<br>B01J39/26<br>B01J41/20<br>B01J20/26<br>B01J20/285<br>B01J20/28 |
| A,D | WO 2014/079580 A1 (ETH ZUERICH [CH]) 30 May 2014 (2014-05-30)<br>* page 5, line 17 - page 6, line 7 *<br>* page 8, line 4 - page 11, line 15 *<br>* page 18, line 1 - page 22, line 9; tables 1, 2 *<br>* page 46, line 18 - page 47, line 6 *<br>----- | 1-15 | |
| A | US 2016/137762 A1 (FONNUM GEIR [NO] ET AL) 19 May 2016 (2016-05-19)<br>* paragraphs [0002] - [0005], [0059], [0333], [0366] *<br>----- | 1-15 | |

TECHNICAL FIELDS SEARCHED (IPC)

B01J
C08F
G01N

The present search report has been drawn up for all claims

| Place of search | Date of completion of the search | Examiner |
|---|---|---|
| The Hague | 17 May 2018 | Mayer, Anne |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 17 20 6161

This annex lists the patent family members relating to the patent documents cited in the above-mentioned European search report. The members are as contained in the European Patent Office EDP file on
The European Patent Office is in no way liable for these particulars which are merely given for the purpose of information.

17-05-2018

| Patent document cited in search report | Publication date | Patent family member(s) | Publication date |
|---|---|---|---|
| WO 2009043191 A2 | 09-04-2009 | NONE | |
| WO 2014079580 A1 | 30-05-2014 | EP 2922902 A1 | 30-09-2015 |
| | | US 2015291760 A1 | 15-10-2015 |
| | | WO 2014079580 A1 | 30-05-2014 |
| US 2016137762 A1 | 19-05-2016 | CN 104245745 A | 24-12-2014 |
| | | CN 106883334 A | 23-06-2017 |
| | | EP 2812360 A2 | 17-12-2014 |
| | | JP 6170074 B2 | 26-07-2017 |
| | | JP 2015507063 A | 05-03-2015 |
| | | KR 20140130155 A | 07-11-2014 |
| | | RU 2014136081 A | 27-03-2016 |
| | | US 2013210991 A1 | 15-08-2013 |
| | | US 2014073715 A1 | 13-03-2014 |
| | | US 2014073738 A1 | 13-03-2014 |
| | | US 2014142254 A1 | 22-05-2014 |
| | | US 2016097094 A1 | 07-04-2016 |
| | | US 2016097095 A1 | 07-04-2016 |
| | | US 2016137762 A1 | 19-05-2016 |
| | | WO 2013119936 A2 | 15-08-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014079580 A


### Non-patent literature cited in the description


- **SORENSEN, C. M.** Light scattering by fractal aggregates: A review. *Aerosol Sci. Technol. Am. Assoc. Aerosol Res,* 2001, vol. 35, 648-687